# EUROPÄISCHE PATENTSCHRIFT

(11) **EP 0 712 353 B1**
(45) Veröffentlichungstag und Bekanntmachung des Hinweises auf die Patenterteilung: **09.04.1997**
(21) Anmeldenummer: 94924846.2
(22) Anmeldetag: 04.08.1994
(51) Int. Cl.: B29D 31/00

(54) **WABENFÖRMIGER HOHLKÖRPER AUS KUNSTSTOFF, VORZUGSWEISE POLYOLEFINEN**
HONEYCOMB-STRUCTURE HOLLOW BODIES OF PLASTIC, PREFERABLY POLYOLEFINS
CORPS CREUX A NIDS D'ABEILLES EN MATIERE PLASTIQUE, DE PREFERENCE EN POLYOLEFINE

(30) Priorität: 04.08.1993 DE 4326189
(43) Veröffentlichungstag der Anmeldung: 22.05.1996
(73) Patentinhaber: Steuler-Industriewerke GmbH, D-56203 Höhr-Grenzhausen (DE)
(72) Erfinder: SCHARKOWSKI, Jürgen, D-56424 Mogendorf (DE)
(74) Vertreter: VOSSIUS & PARTNER
(86) Internationale Anmeldenummer: EP9402590
(87) Internationale Veröffentlichungsnummer: WO9504649

(56) Entgegenhaltungen:
- DE-A- 2 641 114
- DE-A- 2 725 220
- DE-A- 4 102 732
- DE-A- 4 141 934
- DATABASE WPI Week 9151, Derwent Publications Ltd., London, GB; AN 91-372232 C51! 'plastic honeycomb manufacture' & JP,A,3 248 835 (YOKOHAMA RUBBER KK,KOBAKKU KK,ARII GOSEI KOGYOSHO YG) 6. November 1991

## Beschreibung

Die Erfindung betrifft einen wabenförmigen Hohlkörper aus Kunststoff, vorzugsweise Polyolefinen.

Es ist bekannt, wabenförmige Hohlkörper herzustellen. Dabei werden speziell profilierte Kunststoffrohre oder Profile so zusammengefügt, daß eine im Querschnitt bienenwabenartige Struktur entsteht, deren Abmessungen bis zu mehreren Metern Durchmesser und Länge betragen können. Das wesentliche Einsatzgebiet dieser Hohlkörper ist die Gasreinigung, in der das Luftvolumen axial durch die Waben hindurchgeführt wird, was zu einer wesentlichen Vergrößerung der Berührungs-, Austausch- und Kontaktfläche des Gases mit der Rohrwandung führt.

Spezielle Einsatzgebiete für derartige Hohlkörper sind sogenannte Naßelektrofilter, in denen Schadstoffe beim Durchströmen durch die wabenartigen Rohre über ein von Mittelelektroden erzeugtes Spannungsfeld an den Wandungen abgeschieden werden. An den Werkstoff derartiger Konstruktionen werden hohe Anforderungen hinsichtlich der verfahrensmäßigen chemischen und thermischen Belastungen sowie der erforderlichen Widerstandsfähigkeit gegenüber den im Hochspannungsfeld möglichen elektrischen Überschlägen gestellt.

Im Stand der Technik werden gegenwärtig wabenförmige Strukturen der beschriebenen Art aus PVC gefertigt, wobei extrudierte Sechskantrohre oder abgekantete PVC-Bleche so zusammengefügt sind, daß sechseckige Wabenstrukturen entstehen. Kennzeichen dieser Strukturen ist, daß aus Platzersparnisgründen die Wandungen der Wabenstruktur ohne Zwischenraum aneinanderliegen. In der Praxis erfolgt dies durch ein Zusammenkleben der Wabenrohre. Dadurch wird auch die für Wabenstrukturen typische hohe Formstabilität des Hohlkörpers erreicht, welche bei Auftreten unterschiedlicher thermischer und mechanischer Spannungen die erforderlichen engen Maßtoleranzen für Naßelektrofilter gewährleisten.

Eine solche Wabenstruktur ist in der DE-A1-41 02 732 dargestellt.

Polyvinylchlorid als Materialwerkstoff eignet sich für diese Wabenkonstruktion besonders gut, da neben der chemischen Beständigkeit eine hohe Formstabilität und die als Fertigungsvoraussetzung erforderliche Verklebbarkeit gewährleistet ist.

Andererseits wird bei Naßelektrofiltern die Haltbarkeit dadurch eingeschränkt, daß von den zentrisch angeordneten Elektroden Spannungstiberschläge auf die PVC-Wandungen in der Praxis nicht auszuschließen sind, welche dort zu starken lokalen Verbrennungen führen.

Es hat sich herausgestellt, daß dieser gravierende Nachteil des PVC-Werkstoffes bei dem Kunststoffmaterial Polypropylen nicht besteht. Diesem Vorteil stehen jedoch werkstoffspezifische Nachteile der Verarbeitung zu wabenförmigen Strukturen entgegen. Insbesondere handelt es sich dabei um die geringe Formstabilität von Polypropylen bei Wärmeeinwirkung infolge des hohen Rückerinnerungsvermögens in Verbindung mit dem sehr hohen Wärmeausdehnungskoeffizienten des Materials.

Ein weiterer Nachteil des Werkstoffs PVC besteht in der umweltproblematischen Herstellung und Entsorgung.

Demgegenüber ist die Herstellung, Verarbeitung und Entsorgung des umweltfreundlichen Polypropylens unproblematisch.

Jedoch weisen extrudierte Profilrohre bzw. warmverformte oder abgekantete bzw. geschweißte Profile aus Polypropylen, welche zur Herstellung wabenartiger Konstruktionen in Frage kommen, hohe innere Spannungen auf, welche bei der Verarbeitung zu wabenförmigen Strukturen zu großen Problemen bei der Formstabilität führen.

Ein weiterer Nachteil des Polypropylenwerkstoffes besteht darin, daß er nicht verklebbar ist. Damit scheiden die im Stand der Technik üblichen Fertigungsmethoden aus.

Die DE-B2 26 41 114 offenbart ein Verfahren zur Herstellung eines Kunststoffelektrofilters in Wabenform. Die Waben werden aus spundwandförmigen, aus glasfaserverstärktem Polyester bestehenden warmgepreßten Plattenstreifen zusammengesetzt. Die Wahl des Materials als glasfaserverstärktem Polyester erfolgte, weil PVC bei Temperaturbelastung zu hohe Relaxationseffekte aufweist. Zur Vermeidung der Nachteile von reinem Kunststoff wird in der bei diesem bekannten Verfahren als Material glasfaserverstärktes Polyester eingesetzt.

Aus der EP-A2-0 153 681 ist ein Verfahren zur Herstellung von dreidimensionalen lichtdurchlässigen Wabenstrukturen aus Kunststoffen bekannt. Dabei werden Kunststoffolien oder Platten durch Warmformen oder Tiefziehen zu rippenförmigen Strukturen ausgebildet. Eine Wabenstruktur wird dann durch Übereinanderstapeln dieser geformten Folien oder Platten ausgebildet.

Aus Kunststoff-Lexikon (Carl Hanser Verlag München Wien 1981), S. 504 ist es an sich bekannt, thermoplastische Kunststoffe auch durch Spritzgießen herzustellen.

Die DE-C1-41 41 934 betrifft einen Elektroabscheider mit wabenförmig angeordneten Niederschlagselektroden. Diese bilden ein sternförmiges Element aus drei hermetisch miteinander verbundenen Wandteilen. An den Außenkanten jedes Wandteils sind in Längsrichtung Rohrabschnitte angeordnet, in die Stangen eingeführt werden, die die sternförmigen Elemente miteinander verbinden und so eine Wabenstruktur ausbilden. Die sternförmigen Elemente bestehen aus einem elektrisch leitenden Kunststoff. Es wird dabei als vorteilhaft angesehen, daß diese Elemente durch die Rohrabschnitte verbunden werden, wobei Fügeverfahren wie Schweißen oder Kleben nicht mehr erforderlich sind.

Die DE-A1-27 25 220 betrifft eine Schalengruppe für den Anbau bzw. die Anpflanzung von Pflanzen. Dabei ist eine wabenförmige Grundstruktur Vorgesehen, deren mittlerer Teil aus einem verrottendem oder zerfallenden Spezialpapier bzw. Karton besteht. Dadurch wird es ermöglicht, daß beim Anbau von Pflanzen die Wabenkonstruktion spaltet.

Demgegenüber liegt der Erfindung die Aufgabe zugrunde, einen wabenförmigen Kunststoffhohlkörper aus Polyolefinen, vorzugsweise Polypropylen, zur Verfügung zu stellen, bei dem die Probleme der Formstabilität und mangelnden Klebfähigkeit beseitigt sind.

Die Aufgabe wird mit den Merkmalen der Patentansprüche gelöst.

Bei der Lösung geht die Erfindung von dem Grundgedanken aus, Kunststoffelemente, die durch Spritzgießen hergestellt sind, vorzusehen, die vorzugsweise in einer speziellen Schweißtechnik, wobei Punktschweißen bevorzugt ist, zu einem Wabenrohr miteinander verbunden werden.

Die Erfindung hat folgende Vorteile.

Durch die Formgestaltung der Kunststoffelemente durch Spritzgießen ist es möglich, spannungsarme und formstabile Kunststoffelemente herzustellen, aus welchen die Wabenstrukturen zusammengesetzt werden können. Soweit erforderlich, werden Restspannungen durch thermische Nachbehandlung nach dem Spritzvorgang abgebaut, ohne daß dies die Elementform nachteilig beeinflußt. Es ist möglich, wabenförmige Hohlkörper herzustellen, welche unter Verwendung des Werkstoffes Polypropylen formstabil und maßgenau sind.

Im folgenden wird die Erfindung anhand der Zeichnungen näher beschrieben. Es zeigen:
- Fig. 1: einen schematischen Querschnitt durch eine erfindungsgemäße Ausführungsform entlang der Linie I-I in Fig. 4;
- Fig. 2: einen vergrößerten Querschnitt gemäß Fig. 1 mit Verbindungselementen,
- Fig. 3: die Ansicht eines Spritzgußelements im Aufriß gemäß dem Schnitt III-III in Fig. 2, und
- Fig. 4: eine Seitenansicht eines Rohrbündels mit Wabenstruktur.

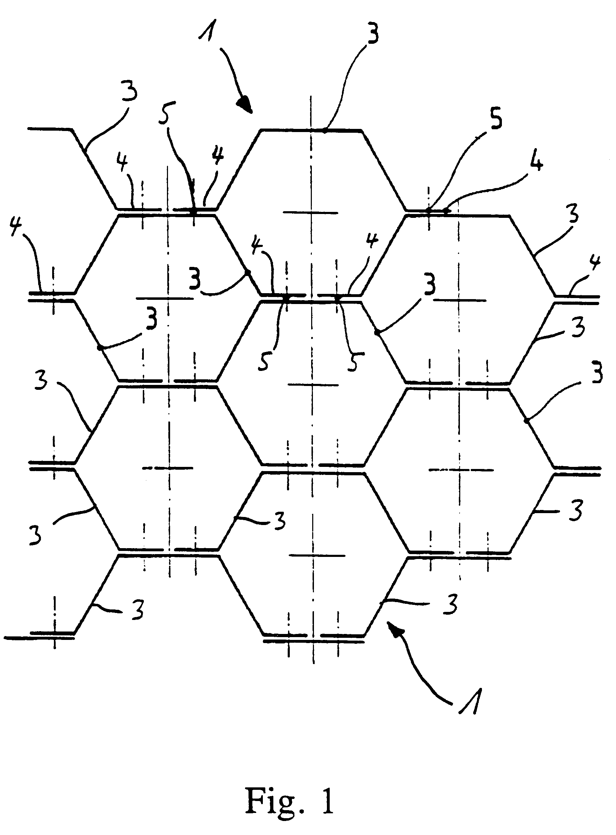

Eine Vielzahl durchgehender Wabenrohre 1, die über einen Tragflansch (nicht dargestellt) zusammengehalten und getragen werden, sind zu einem Bündel zusammengefaßt. Die durchgängigen Wabenrohre 1 sind aus einzelnen Kunststoffelementen (Spritzgußelementen) 3 zusammengesetzt, deren Anordnung in Fig. 1 dargestellt ist. Die Kunststoffelemente 3 bestehen bevorzugt jeweils aus halbrohrartig profilierten Segmenten mit Anschlußflanschen 4. Diese Kunststoffelemente werden über die Flansche 4 und Verbindungselemente 5 so mit den benachbarten in gleicher Weise geformten Kunststoffelementen 3 verbunden, daß durchgängige Vollrohre entstehen. Im vorliegenden Ausführungsbeispiel ist die Profilierung der Kunststoffelemente 3 so gehalten, daß durch die Verbindung der Einzelteile untereinander Sechskantrohre entstehen, die in ihrer Gesamtheit die wabenförmige Struktur bilden.

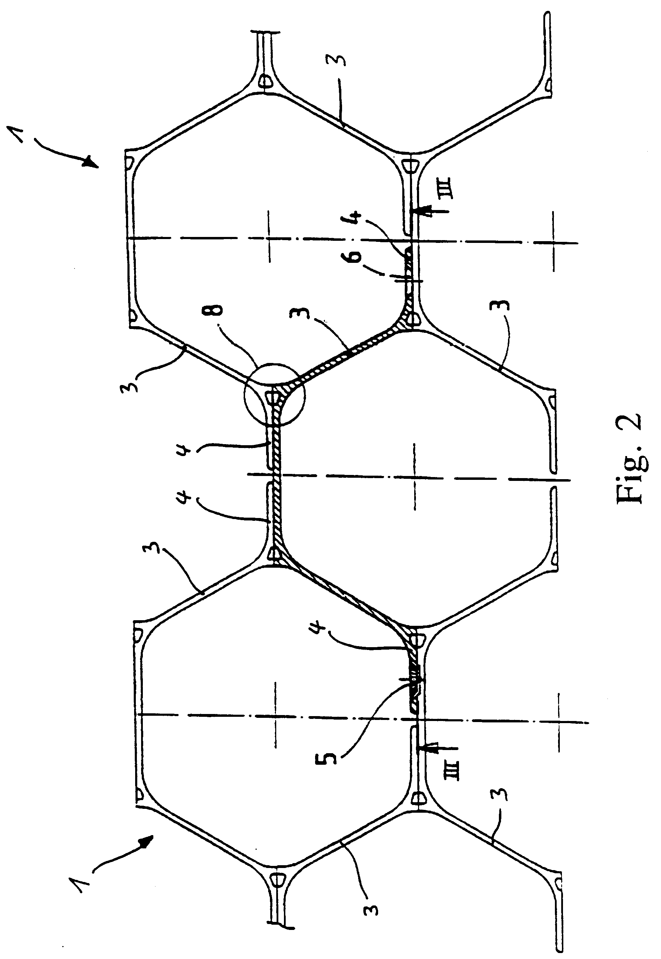

In Fig. 2 wird ein vergrößerter Ausschnitt der Wabenstruktur dargestellt. Man erkennt die zueinander versetzt angeordnete Position der einzelnen Kunststoffelemente 3, die an den Flanschen 4 über Verbindungselemente 5 mit anderen Kunststoffelementen 3 verbunden sind. In dieser Ausführungsform ist als Verbindungselement 5 eine Schweißverbindung Vorgesehen, welche in bekannter Weise durch Auftragsschweißen, Ultraschall-, Rotation- oder Reibschweißen erfolgt. Durch die beschriebene Schweißverbindung wird eine stabile Wabenstruktur gesichert, ohne die bisher bekannte und im vorliegenden Fall nicht anwendbare Klebeverbindung der Teile untereinander in Anspruch nehmen zu müssen. Durch eine Verstärkung 8 der Wabenrohrkanten wird außerdem eine besonders gute Formstabilität der Wabenrohre 1 und damit der Gesamtstruktur erreicht.

Die Größe der Kunststoffelemente wird bei Spritzgußelementen durch die mögliche Größe der Spritzgußformen begrenzt. Die Spritzgußelemente 3 können daher nicht in der ganzen erforderlichen Höhe der Wabenrohre 1 hergestellt werden, sondern müssen unterteilt werden. Mit den begrenzten Abmessungen der Spritzgußelemente 3 ist der Vorteil verbunden, daß herstellungsbedingte Spannungen Verringert werden. Ein weiterer Vorteil besteht darin, daß auftretende Materialspannungen beim Zusammenfügen der Strukturen durch Verwendung kleiner Bauteile gering gehalten werden können. In den Verbindungsflanschen 4 sind Öffnungen 6 angeordnet, durch die mittels der Verbindungselemente 5 eine unlösbare Verbindung mit den benachbarten Spritzgußelementen 3 hergestellt wird.

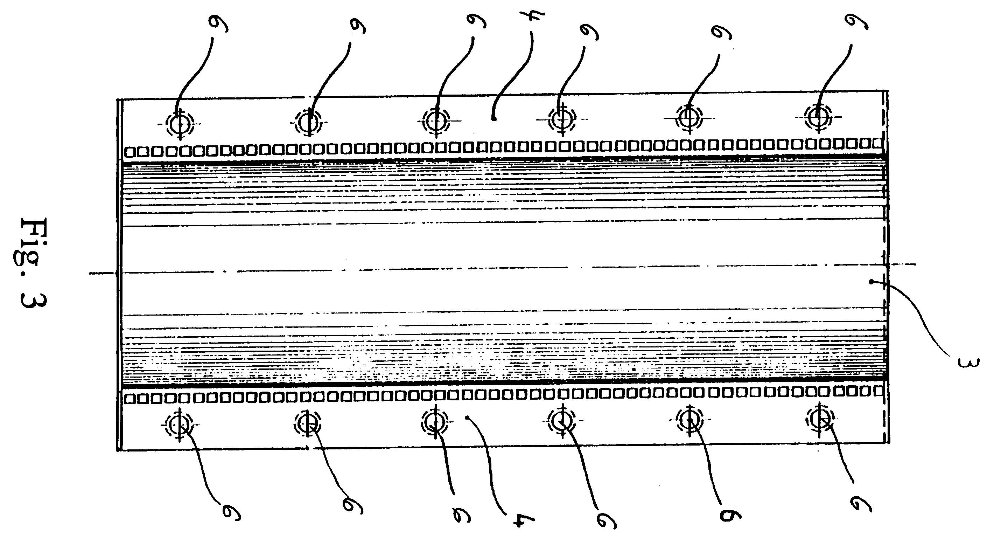

Fig. 3 zeigt den Blick in ein einzelnes Spritzgußelement 3, das entsprechend dem Schnitt A-A' in Fig. 2 aufgeschnitten ist. Zu erkennen sind die längs des Spritzgußelements 3 sich hinziehenden Seitenflansche 4 mit den Öffnungen 6 für die Verbindungselemente.

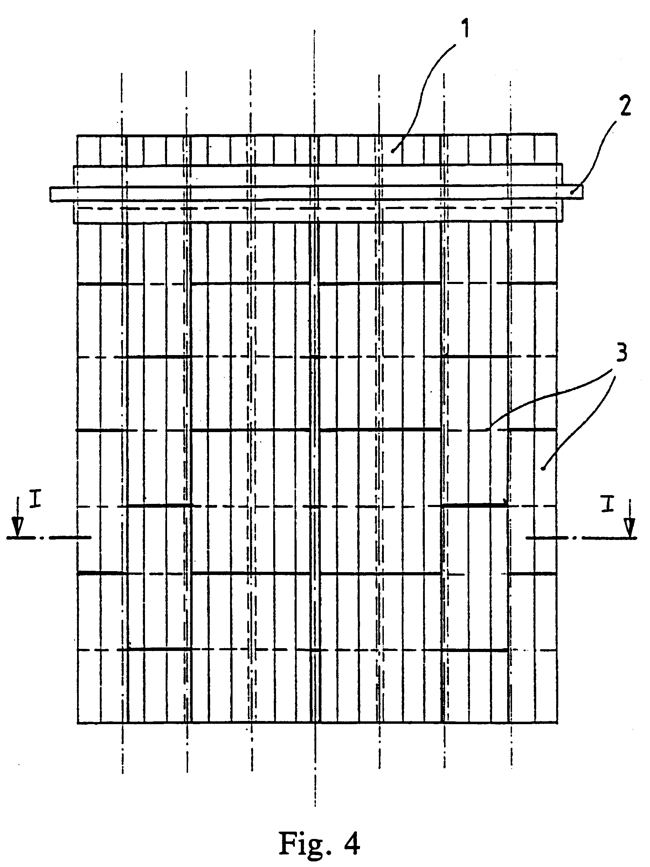

Fig. 4 zeigt eine Seitenansicht eines aus vielen Waben bestehenden Rohrbündels. Das Bündel besteht aus einer Vielzahl durchgehender Wabenrohre 1 aus gegeneinander versetzten Kunststoffelementen 3, die mittels eines Tragflansches 2 zusammengehalten und getragen werden. Durch den Versatz der Kunststoffelement, der in der Fig. 4 durch verstärkte Linien angedeutet ist, wird eine Erhöhung der Stabilität des Rohrbündels erreicht.

Außer der bevorzugten Ausführungsform durch Schweißen lassen sich die Verbindungselemente 5 auch durch Nieten oder durch lösbare Schraubverbindungen realisieren.

In der dargestellten erfindungsgemäßen Ausführungsform werden die Wabenrohre 1 im Querschnitt durch zwei Kunststoffelemente zusammengesetzt. Im Rahmen der Erfindung sind aber auch Wabenrohre möglich, die aus mehr als zwei Kunststoffelementen, z.B. drei oder sechs Elementen, bestehen und erfindungsgemäß über Flansche mit anderen Kunststoffelementen verbunden sind.

## Patentansprüche

1. Hohlkörper mit innerer Wabenstruktur, wobei die Wabenstruktur aus einzelnen Kunststoffelementen (3) besteht, die so geformt sind, daß sie zusammengefügt durchgängige Wabenrohre (1) bilden, dadurch gekennzeichnet, daß die Kunststoffelemente (3) durch spritzgießen hergestellt sind.

2. Hohlkörper nach Anspruch 1, dadurch gekennzeichnet, daß die Kunststoffelemente (3) aus spritzfähigen Thermoplasten hergestellt sind.

3. Hohlkörper nach Anspruch 1 oder 2, dadurch gekennzeichnet, daß die einzelnen Kunststoffelemente (3) durch Verbindungselemente (5) kraft- und formschlüssig zu der Wabenstruktur verbunden sind.

4. Hohlkörper nach einem der Ansprüche 1 bis 3, dadurch gekennzeichnet, daß die Wabenrohre (1) in ihrer Länge entsprechend den möglichen Abmessungen der Kunststoffelemente (3) unterteilt sind.

5. Hohlkörper nach einem der Ansprüche 1 bis 4, dadurch gekennzeichnet, daß die Kunststoffelemente (3) in der Höhe versetzt im Verband mit den benachbarten Kunststoffelementen (3) angeordnet und mit diesen über die Verbindungselemente (5) verbunden sind.

6. Hohlkörper nach einem der Ansprüche 1 bis 5, dadurch gekennzeichnet, daß die Kunststoffelemente (3) in ihren Ecken eine Verstärkung (8) aufweisen, die eine zusätzliche Sicherung der Formstabilität bewirkt.

7. Hohlkörper nach einem der Ansprüche 1 bis 6, dadurch gekennzeichnet, daß die Kunststoffelemente (3) mit angeformten Befestigungsflanschen (4) versehen sind.

8. Hohlkörper nach einem der Ansprüche 1 bis 7, dadurch gekennzeichnet, daß die Befestigungsflansche (4) Öffnungen (6) aufweisen, durch die hindurch eine Verbindung mit dem benachbarten Kunststoffelement (3) erfolgt.

9. Hohlkörper nach einem der Ansprüche 3 bis 8, dadurch gekennzeichnet, daß das Verbindungselement (5) eine Schweißverbindung ist.

10. Hohlkörper nach Anspruch 9, dadurch gekennzeichnet, daß die Schweißverbindung eine Punktschweißverbindung ist.

11. Hohlkörper nach Anspruch 9 oder 10, dadurch gekennzeichnet, daß die Schweißverbindung durch Auftragsschweißen, Ultraschall-, Rotations- oder Reibschweißen hergestellt ist.

12. Hohlkörper nach einem der Ansprüche 3 bis 8, dadurch gekennzeichnet, daß das Verbindungselement (5) eine Schraubverbindung ist.

13. Hohlkörper nach einem der Ansprüche 1 bis 12, dadurch gekennzeichnet, daß die Kunststoffelemente (3) aus Polyolefinen bestehen.

## Claims

1. A hollow body having an internal honeycomb structure, wherein the honeycomb structure consists of individual plastics components (3) which are designed such that they form continuous honeycomb pipes (1) in the joint state, characterized in that the plastics components (3) are produced by injection molding.

2. The hollow body according to claim 1, characterized in that the plastics components (3) are made of thermoplastics that can be injection molded.

3. The hollow body according to claim 1 or 2, characterized in that the individual plastics components (3) are frictionally and positively connected by the connecting elements (5) to form the honeycomb structure.

4. The hollow body according to any one of claims 1 to 3, characterized in that the honeycomb pipes (1) are lengthwise divided corresponding to the possible dimensions of the plastics components (3).

5. The hollow body according to any one of claims 1 to 4, characterized in that the plastics components (3) are displaced with respect to their height in connection with the adjacent plastics components (3) and are connected with the latter via the connecting elements (5).

6. The hollow body according to any one of claims 1 to 5, characterized in that the plastics components (3) comprise a reinforcement (8) in their corners which additionally guarantees the dimensional stability.

7. The hollow body according to any one of claims 1 to 6, characterized in that the plastics components (3) are provided with fixing flanges (4) molded thereto.

8. The hollow body according to any one of claims 1 to 7, characterized in that the fixing flanges (4) are provided with openings (6) through which a connection to the adjacent plastics component (3) is effected.

9. The hollow body according to any one of claims 3 to 8, characterized in that the connecting element (5) is a weld joint.

10. The hollow body according to claim 9, characterized in that the weld joint is a spot weld joint.

11. The hollow body according to claim 9 or 10, characterized in that the weld joint is produced by build-up welding, ultrasonic, spin or friction welding.

12. The hollow body according to any one of claims 3 to 8, characterized in that the connecting element (5) is a screw connection.

13. The hollow body according to any one of claims 1 to 12, characterized in that the plastics components (3) are made of polyolefins.

## Revendications

1. Corps creux présentant une structure alvéolaire ou structure en nid d'abeille interne, la structure alvéolaire étant constituée de différents éléments en plastique (3) qui à l'état assemblé, forment des tubes alvéolaires continus (1), caractérisé en ce que les éléments en plastique (3) sont fabriqués par moulage par injection.

2. Corps creux selon la revendication 1, caractérisé en ce que les éléments en plastique (3) sont fabriqués à partir de thermoplastiques injectables.

3. Corps creux selon la revendication 1 ou 2, caractérisé en ce que les différents éléments en plastique (3) sont raccordés par des élements de liaison (5) par liaison par adhérence ou par liaison par engagement positif pour former la structure alvéolaire.

4. Corps creux selon l'une des revendications 1 à 3, caractérisé en ce que les tubes alvéolaires (1) sont subdivisés dans leur longueur selon les dimensions éventuelles des éléments en plastique (3).

5. Corps creux selon l'une des revendications 1 à 4, caractérisé en ce que les éléments en plastique (3) sont agencés de façon décalée en hauteur en assemblage avec les éléments en plastique avoisinants (3) et sont reliés avec ceux-ci par l'intermédiaire d'éléments de liaison (5).

6. Corps creux selon l'une des revendications 1 à 5, caractérisé en ce que les éléments en plastique (3) présentent un renforcement (8) dans leurs coins qui assure une stabilité de forme supplémentaire.

7. Corps creux selon l'une des revendications 1 à 6, caractérisé en ce que les éléments en plastique (3) sont munis de brides de fixation rapportées (4).

8. Corps creux selon l'une des revendications 1 à 7, caractérisé en ce que les brides de fixation (4) présentent des ouvertures (6) à travers lesquelles s'effectue une liaison avec l'élément en plastique avoisinant (3).

9. Corps creux selon l'une des revendications 3 à 8, caractérisé en ce que l'élément de liaison (5) est une liaison soudée.

10. Corps creux selon la revendication 9, caractérisé en ce que la liaison soudée est une liaison de soudure par points.

11. Corps creux selon le revendication 9 ou 10, caractérisé en ce que la liaison soudée est fabriquée par soudage d'apport, soudage par ultrasons, soudage par rotation ou par friction.

12. Corps creux selon l'une des revendications 3 à 8, caractérisé en ce que l'élément de liaison (5) est une liaison vissée.

13. Corps creux selon l'une des revendications 1 à 12, caractérisé en ce que les éléments en plastique (3) sont constitués par des polyoléfines.
